(19) Europäisches Patentamt
European Patent Office
Office européen des brevets

(11) Publication number : 0 560 602 A1

# (12) EUROPEAN PATENT APPLICATION

(21) Application number : 93301841.8

(22) Date of filing : 11.03.93

(51) Int. Cl.[5] : C04B 24/26, C04B 28/02

(30) Priority : 11.03.92 JP 52164/92
11.03.92 JP 52165/92

(43) Date of publication of application :
15.09.93 Bulletin 93/37

(84) Designated Contracting States :
AT BE CH DE DK ES FR GB GR IE IT LI LU NL PT SE

(71) Applicant : W.R. GRACE & CO.
Grace Plaza 1114 Avenue of the Americas
New York New York 10036 (US)

(72) Inventor : Koyata, Hideo
2-105 Sun Stage Ryokuen Toshi, 4-2-1 Ryokuen
Izumi-ku, Yokohama-shi, Kanagawa-ken (JP)
Inventor : Tsutsumi, Tomoyuki
285 Kasamacho, Sakae-ku
Yokohama-shi, Kanagawa-ken (JP)

(74) Representative : Bentham, Stephen
J.A. Kemp & Co. 14 South Square Gray's Inn
London, WC1R 5LX (GB)

## (54) Concrete composition having high flowability.

(57) A concrete composition which exhibits high flowability, low decrease in flowability with progression of time and lack of segregation over time, is composed of from 350 to 700 Kg of hydraulic cement material per $m^3$ of concrete, up to 185 g of water per $m^3$ of concrete, fine aggregate, coarse aggregate and from 0.05 to 3 parts per 100 parts of hydraulic cement material of certain specific alkenyl ether/maleic anhydride copolymers material.

EP 0 560 602 A1

The present invention relates to an improved concrete composition which exhibits high flowability, low decrease in the flowability with the progression of time and lack of segregation over time.

The components of conventional concrete compositions have a high tendency to segregate while being worked, such as at the step of conveying, placing of concrete or compaction even if it is uniformly mixed by a mixer. In addition, due to its insufficient flowability, conventional concrete compositions do not reach parts of the mold having a complicated shape, a high density of re-bar arrangement or corners segments and, thereby, provide a defective final concrete structure. Further, due to lowering in the fluidity of the concrete composition with the progression of time (hereafter "slump loss"), the workability of such compositions worsens over time and, thereby, inhibits the ability of correcting defects.

In order to produce concrete structures having durability and high reliability, construction must be done in the field with scrupulous care by skilled workers in the field and compaction work with the greatest possible care is essential to achieve desired results.

In order to improve the workability of concrete, various methods have been tried as, for example, the use of a fluidizing agent such as a high range water reducing agent, a high range AE (air entrained) water reducing agent and/or the use of an admixture having a fine particle size such as silica fume and blast-furnace slag fine powder. However, concrete compositions containing such substances have high slump and inferior flowability and exhibit a high degree of slump loss with the progression of time. With such compositions, good filling and distribution is difficult to obtain by the conventional methods.

Due to the present large amount of construction, the lack of construction engineers and construction workers, and amount of construction in special environments or high performance structures, the technologies require the ability to achieve a concrete structure of high performance and reliability while using minimal manpower and time.

In order to solve these problems, the development of concrete composition having high flowability, small decrease in the flowability with the progression of time and low segregation is highly desired. Such concrete can promote not only less manpower at the placing of concrete and avoidance of noise due to compaction of concrete but also improvement of construction systems.

A concrete composition has now been found comprising at most 185 Kg of water per $m^3$ of concrete, 350 to 700 Kg of a hydraulic cement material per $m^3$ of concrete and specified copolymer component substantially homogeneously distributed therein, can impart the properties of excellent flowability, small decrease in the flowability with the progression of time and low segregation of the concrete composition.

The present invention is directed to a concrete composition which comprises

(A) 350 to 700 Kg of a hydraulic cement material per $m^3$ of concrete;

(B) up to 185 Kg of water per $m^3$ of concrete;

(C) fine aggregate;

(D) coarse aggregate; and

(E) 0.05 to 3 parts by weight, based on 100 parts by weight of the hydraulic cement material, of a copolymer component comprising (i) an alkenyl ether/maleic anhydride copolymer having oxyalkylene chains with from 60 to 95 oxyalkylene units ("Copolymer A"), as more fully described hereinbelow, or (ii) a mixture of an alkenyl ether/ maleic anhydride copolymer having oxyalkylene chains with from 1 to 40 oxyalkylene units ("Copolymer B") in combination with an alkenyl ether/maleic anhydride copolymer have oxyalkylene chains with from 100 to 150 oxyalkylene units ("Copolymer C"), each as more fully described hereinbelow.

The hydraulic cement materials which can be employed in the present invention are portland cements and the like.

It is preferred that the Blaine fineness of the hydraulic cement material is from 2,500 to 200,000 $cm^2/g$ by the specific surface area of cement. When hydraulic cement material having a Blaine fineness of less than 2,500 $cm^2/g$ is used to form the concrete composition of the present invention, the composition does not prevent segregation of the composition's components. Instead bleeding of water occurs. When the Blaine fineness of the hydraulic cement material of the subject concrete is greater than 200,000 $cm^2/g$, the composition requires excessive amount of water and cement additive composition to provide the desired properties. The cost for the preparation of such powder and the requirement for high loading of cement additive does not provide a cost effective mode of practical purposes.

In order to further increase the flowability and resistance to segregation of the subject concrete composition, it is preferred that at least one fine powder material selected from the group consisting of blast-furnace slag, fly ash, silica stone powder, natural mineral powder and superfine siliceous powder be employed as part of the hydraulic cement component of the present composition. The amount of fine powder (Blaine fineness of from 2,000 to 200,000 $cm^2/g$) to be used is not limited and is preferably up to 50% by weight, more preferably 5 to 40% by weight of the total hydraulic cement material (e.g. portland cement) used.

The amount of the hydraulic cement material to be used is from 350 to 700 Kg per $m^3$ of concrete compo-

sition formed and the amount of mixing water is up to 185 Kg per $m^3$ of concrete. The fine aggregate (sand) and coarse aggregate (stone) should be used in conventional amounts to form the concrete composition of the present invention. When the above concrete composition contains the cement additive described hereinbelow, it has been found that the concrete composition is capable of exhibiting high flowability, retention of low slump over extended periods of time and high resistance to the segregation. In contrast, concrete compositions containing the above described fine powder in the specified amount, either alone or together with conventional high range reducing agents or conventional high range AE water reducing agents, do not readily maintain sufficient flowability, slump retention and resistance to the segregation.

The copolymer component required by the present invention is a copolymer of an alkenyl ether and maleic anhydride. Three specific copolymers, when used in the manner described hereinbelow, have been found to achieve the desired combination of properties. Each copolymer, respectively, has an alkenyl ether comonomer represented by the formula:

$$R^1O(AO)_nR^2 \quad (I),$$
$$R^1O(AO)_mR^2 \quad (II),$$
$$R^1O(AO)_pR^2 \quad (III),$$

wherein in each of the above formulae

$R^1$ represents a $C_{2-5}$ alkenyl group;

$R^2$ represents a $C_{1-4}$ alkyl group;

AO represents a $C_{2-18}$, oxyalkylene group in which O represents an oxygen atom and A represents an alkylene group;

n represents an average adduct mole number of from 60 to 95 for the oxyalkylene group;

m represents an average adduct mole number of from 1 to 40 for the oxyalkylene group; and

p represents an average adduct mole number of from 100 to 150 for the oxyalkeylene group.

In the present description and in the appended claims, the term "Copolymer A" shall mean a copolymer of alkenyl ether I and maleic anhydride, as the anhydride, or a partially or completely hydrolyzed product or as a salt (alkali or alkaline earth metal) of the hydrolyzed product and the mole ratio of alkenyl ether I to maleic anhydride being from 30:70 to 70:30;

"Copolymer B" shall mean a copolymer of alkenyl ether II and maleic anhydride, as the anhydride, or a partially or completely hydrolyzed product or as a salt (alkali or alkaline earth metal) of the hydrolyzed product and the mole ratio of alkenyl ether II to maleic anhydride being from 30:70 to 70:30; and

"Copolymer C" shall mean a copolymer of alkenyl ether III and maleic anhydride, as the anhydride, or a partially or completely hydrolyzed product or as a salt (alkali or alkaline earth metal) of the hydrolyzed product and the molar ratio of alkenyl ether III to maleic anhydride being from 30:70 to 70:30.

$C_{2-5}$ alkenyl groups represented by $R^1$ in each of the above described formulae (I), (II), and (III), include, for example, vinyl, allyl, methallyl, 1,1-dimethyl-2-propenyl and 3-methyl-3-butenyl groups and of these groups, allyl group is preferably employed.

$C_{2-18}$ oxyalkylene groups represented by AO in the above described formulae (I), (II) and (III) include, for example, oxyethylene, oxypropylene, oxybutylene, oxytetramethylene, oxydodecylene, oxytetradecylene, oxyhexadecylene and oxyoctadecylene groups. Of these oxyalkylene groups, $C_{2-4}$ oxyalkylene groups such as oxyethylene, oxypropylene and oxybutylene are preferred. The AO may include two or more types of oxyalkylene moieties and such oxyalkylene moieties may be linked in block or at random.

$C_{1-4}$ alkyl groups represented by $R^2$ in the above described formulae (I), (II) and (III) include, for example, methyl, ethyl, propyl, isopropyl, n-butyl, isobutyl and tertiary butyl groups. When the carbon atoms is more than 4 in the $R^2$, the amount of air entrained in the mortar or concrete admixture is increased, and accordingly, it is preferred to select a $C_{1-4}$ alkyl group when air entrainment is not desired.

In one embodiment of the present invention, the concrete composition contains a copolymer component composed of at least one Copolymer A where the average adduct mole number of the oxyalkylene group represented by n is 60 to 95. This copolymer component exhibits the properties of affecting the initial short term dispersion of the particles comprising the cement composition similarly to that caused by conventional slump loss admixtures, such as naphthalene sulfonate formaldehyde high range condensate types, sulfonated melamine resin type or lignosulfonate type admixtures. The present Copolymer A further unexpectedly increases slump with the progression of time. Thus, the present admixture concrete composition containing at least one Copolymer A provides both initial and progressive increases in slump to the composition.

Furthermore, the concrete composition containing Copolymer A surprisingly shows a tendency of reducing the segregation of components and bleeding water and reducing setting retardation. Accordingly, it is not necessarily required to add to the concrete composition of the present invention a water soluble high molecular weight substance which is essential for the resistance to the segregation of concrete or the suppression of

bleeding as described in Japanese Patent Publication (Kokai) No. 237049/1991.

Furthermore, depending on the types of hydraulic cement material and aggregate and the concrete compositions formed therewith, the copolymer component of Copolymer A may also contain small amounts (5 to 30 parts by weight, based on 100 parts by weight of Copolymer A, its hydrolyzed product or a salt of the hydrolyzed product of the present invention), of Copolymer B or Copolymer C, their hydrolyzed product or a salt of the hydrolyzed product. The desire to incorporate Copolymer B or Copolymer C can be readily determined by conducting slump tests of cement composition to achieve the specific characteristic desired.

In a second embodiment of the subject invention, the concrete composition contains a mixture of Copolymer B and Copolymer C. Thus, it has been unexpectedly found according to the present invention that a balanced combination of the Copolymer B with the Copolymer C , when used in the subject concrete composition, produce a concrete composition having excellent flowability and slump retention. Furthermore, the concrete composition comprising such a combination of Copolymer B with Copolymer C surprisingly shows a tendency of substantially inhibiting segregation of components and bleeding water. Accordingly, it is not necessarily required to add to the concrete composition of the present invention a water soluble high molecular weight substance which is essential for the resistance to the segregation of concrete or the suppression of bleeding, as described in Japanese Patent Publication (Kokai) No. 237049/1991.

The mixing ratio of Copolymer B and Copolymer C may vary from 97-50 : 3-50.

The Copolymers A, B, and C of the present invention can be prepared by the polymerization of an alkenyl ether of the formula (I), (II), or (III) and maleic anhydride in the presence of a peroxide catalyst in accordance with the method described in Japanese Patent Publication (Kokai) No. 297411/1989. The mol ratio of the alkenyl ether of the formula (I), (II), or (III) to maleic anhydride is typically 30 - 70 : 70 - 30 and preferably 50 : 50. If desired, each of the copolymers may contain another monomer which is copolymerizable therewith, such as styrene, an alpha-olefin or vinyl acetate in amounts of up to 30 percent by weight of the total weight of the monomers.

The referred to hydrolyzed products of Copolymers A, B, and C are products having a hydrolyzed maleic acid unit resulting from the hydrolysis of the maleic anhydride unit in the copolymer.

The referred to salts of the hydrolyzed product of Copolymers A, B, and C are salts formed by the maleic acid unit. Exemplary salts include alkali metal salts and alkaline earth metal salts such as lithium salts, sodium salts; ammonium salts; and organic amine salts.

The amount of cement additive (either Copolymer A or a mixture of Copolymer B and Copolymer C required to provide the desired effects is from 0.05 to 3 parts by weight, preferably from 0.1 to 1 parts by weight based on 100 parts by weight of the hydraulic cement material contained in the concrete composition.

Conventional cement additives such as air entrainers, water proofing agents, strength enhancers, curing accelerators and, if desired or necessary, antifoaming agents can also be added to the concrete composition of the present invention.

The above described copolymers as well as conventional cement additives, if employed, can be added to the other components in any conventional manner. For example, they can be added to the mixing water used for the preparation of the subject concrete composition or to an already mixed concrete composition or as an aqueous solution or suspension.

The concrete composition of the present invention has high flowability and high resistance to the segregation and, in addition, the slump retention with the progression of time is extremely improved. Accordingly, the concrete composition having the high flowability of the present invention can have various applications. For example, it can effectively be used for general construction work; architectural construction work; lining of tunnels; structure mass concrete; refilling of side ditches; placing of concrete into narrow spaces or frames of complicated shapes; and construction of concrete structures having a high density of re-bar arrangement.

The present invention is further explained by the following examples which are given for illustrative purposes and are not meant to limit the invention. All other parts and percentages are by weight unless otherwise stated.

Examples 1 to 30 and Comparative Examples 1 to 11

Forty liters of the concrete composition as shown in Table 1 and Table 2 (for comparative samples) and the copolymer additives, as shown in Table 3, were added in a 50 liter forced mixing type mixer and mixed at a mixing ratio as shown in Tables 1 and 2 for 3 minutes to prepare fluidized concrete having a slump of 21 to 25 cm, a slump flow of 40 to 60 cm and an air content of at most 2% by volume. After mixing, the mixture was transferred into a mixing boat and retempering was conducted at a predetermined number and the slump, slump flow and air content with the progression of time was measured for up to 60 minutes.

The procedure specified in JIS-A6204 were employed to measure slump, air content, setting time and compressive strength and to prepare test specimens for measuring the compressive strength. The results are shown in Tables 4 and 5 (comparative).

The flowability of concrete was evaluated by measuring slump and slump flow and by calculating flow rate, and as the index for the resistance to segregation, the state of concrete during the above described measurements were observed by naked eyes and the judgment was as follows:

A: No segregation was observed
B: Segregation was hardly observed
C: Some segregation was confirmed
D: Clear segregation was confirmed

Table 1

| Example No. | Concrete Composition (Kg/$m^3$) Hydraulic Material: Cement[1)] | Blast-Furnace Slag[2)] | Fly Ash[3)] | Silica Fume[4)] | Water[5)] | Ratio of Fine Aggregate[6)] And Coarse Aggregate[7)] (volume %) | Cement Additive | Amount Added Based on Weight of Cement (weight%) |
|---|---|---|---|---|---|---|---|---|
| 1 | 245 | 105 | 0 | 0 | 185 | 49.0 | Copolymer(b)/Copolymer(g) | 0.18/0.03 |
| 2 | 245 | 105 | 0 | 0 | 175 | 49.0 | Copolymer(b) | 0.19 |
| 3 | 350 | 150 | 0 | 0 | 175 | 47.0 | Copolymer(b) | 0.18 |
| 4 | 350 | 150 | 0 | 0 | 175 | 47.0 | Copolymer(a) | 0.17 |
| 5 | 455 | 195 | 0 | 0 | 165 | 45.5 | Copolymer(b)/Copolymer(d) | 0.15/0.02 |
| 6 | 280 | 0 | 70 | 0 | 175 | 49.0 | Copolymer(b) | 0.18 |
| 7 | 400 | 0 | 100 | 0 | 175 | 47.0 | Copolymer(b) | 0.16 |
| 8 | 520 | 0 | 130 | 0 | 165 | 45.5 | Copolymer(b)/Copolymer(d) | 0.14/0.02 |
| 9 | 315 | 0 | 0 | 35 | 175 | 49.0 | Copolymer(b) | 0.17 |
| 10 | 450 | 0 | 0 | 50 | 175 | 47.0 | Copolymer(b) | 0.16 |
| 11 | 585 | 0 | 0 | 65 | 165 | 45.5 | Copolymer(b) | 0.14 |
| 12 | 350 | 0 | 0 | 0 | 175 | 49.0 | Copolymer(b) | 0.21 |
| 13 | 500 | 0 | 0 | 0 | 175 | 47.0 | Copolymer(b) | 0.19 |
| 14 | 650 | 0 | 0 | 0 | 165 | 45.5 | Copolymer(b) | 0.18 |

Table 1 (-continued)

| Example No. | Concrete Composition (Kg/m$^3$) Hydraulic Material Cement[1)] | Blast-Furnace Slag[2)] | Fly Ash[3)] | Silica Fume[4)] | Water[5)] | Ratio of Fine Aggregate[6)] And Coarse Aggregate[7)] (volume %) | Cement Additive | Amount Added Based on Weight of Cement (weight%) |
|---|---|---|---|---|---|---|---|---|
| 15 | 245 | 105 | 0 | 0 | 185 | 49.0 | Copolymer(d)/Copolymer(g) | 0.13/0.07 |
| 16 | 245 | 105 | 0 | 0 | 175 | 49.0 | Copolymer(d)/Copolymer(g) | 0.17/0.05 |
| 17 | 350 | 150 | 0 | 0 | 175 | 47.0 | Copolymer(c)/Copolymer(g) | 0.14/0.09 |
| 18 | 350 | 150 | 0 | 0 | 175 | 47.0 | Copolymer(d)/Copolymer(g) | 0.07/0.04 |
| 19 | 350 | 150 | 0 | 0 | 175 | 47.0 | Copolymer(e)/Copolymer(g) | 0.12/0.12 |
| 20 | 350 | 150 | 0 | 0 | 175 | 47.0 | Copolymer(d)/Copolymer(g) | 0.15/0.10 |
| 21 | 455 | 195 | 0 | 0 | 165 | 45.5 | Copolymer(d)/Copolymer(g) | 0.15/0.02 |
| 22 | 280 | 0 | 70 | 0 | 175 | 49.0 | Copolymer(d)/Copolymer(g) | 0.14/0.02 |
| 23 | 400 | 0 | 100 | 0 | 175 | 47.0 | Copolymer(d)/Copolymer(g) | 0.15/0.04 |
| 24 | 520 | 0 | 130 | 0 | 165 | 45.5 | Copolymer(d)/Copolymer(g) | 0.15/0.02 |
| 25 | 315 | 0 | 0 | 35 | 175 | 49.0 | Copolymer(d)/Copolymer(g) | 0.16/0.05 |
| 26 | 450 | 0 | 0 | 50 | 175 | 47.0 | Copolymer(d)/Copolymer(g) | 0.15/0.04 |
| 27 | 585 | 0 | 0 | 65 | 165 | 45.5 | Copolymer(d)/Copolymer(g) | 0.15/0.02 |
| 28 | 350 | 0 | 0 | 0 | 175 | 49.0 | Copolymer(d)/Copolymer(g) | 0.17/0.05 |
| 29 | 500 | 0 | 0 | 0 | 175 | 47.0 | Copolymer(d)/Copolymer(g) | 0.15/0.04 |
| 30 | 650 | 0 | 0 | 0 | 165 | 45.5 | Copolymer(d)/Copolymer(g) | 0.15/0.02 |

Table 1 (-continued)

1) Cement: Commercial portland cement (an equi-amount mixture of 3 types of commercial portland cement); Specific gravity: 3.16

2) Blast-furnace slag: Fineness: 8,000 $cm^2/g$ by the specific surface area of cement by blaine; Specific gravity: 2.90

3) Fly ash: Fineness: 2,880 $cm^2/g$ by the specific surface area of cement by blaine; Specific gravity: 2.19

4) Silica fume: Fineness: 200,000 $cm^2/g$ by the specific surface area of cement by blaine; Specific gravity 2.20

5) Water: Tap water

6) Fine aggregate: Sand from the Ohi River in Japan; Specific gravity: 2.60; Fineness modulus: 2.76

7) Coarse aggregate: Crushed stone produced at Oume in Tokyo; Specific gravity: 2.64; Fineness modules: 6.60

Table 2

| Comparative Example No. | Concrete Composition (Kg/m³) | | | | | Ratio of Fine Aggregate[6] And Coarse Aggregate[7] (volume %) | Cement Additive | Amount Added Based on Weight of Cement (weight%) |
|---|---|---|---|---|---|---|---|---|
| | Cement[1] | Hydraulic Material | | | Water[5] | | | |
| | | Blast-Furnace Slag[2] | Fly Ash[3] | Silica Fume[4] | | | | |
| 1 | 350 | 150 | 0 | 0 | 175 | 47.0 | Copolymer(c) | 0.15 |
| 2 | 350 | 150 | 0 | 0 | 175 | 47.0 | Copolymer(d) | 0.17 |
| 3 | 350 | 150 | 0 | 0 | 175 | 47.0 | Copolymer(e) | 0.17 |
| 4 | 350 | 150 | 0 | 0 | 175 | 47.0 | Copolymer(f) | 0.17 |
| 5 | 350 | 150 | 0 | 0 | 175 | 47.0 | Copolymer(g) | 0.25 |
| 6 | 350 | 150 | 0 | 0 | 175 | 47.0 | SP-N[8] | 0.60 |
| 7 | 350 | 150 | 0 | 0 | 175 | 47.0 | SP-N[9] | 0.22 |
| 8 | 400 | 0 | 100 | 0 | 175 | 47.0 | SP-N | 0.70 |
| 9 | 400 | 0 | 100 | 0 | 175 | 47.0 | SP-P | 0.25 |
| 10 | 450 | 0 | 0 | 50 | 175 | 47.0 | SP-N | 0.65 |
| 11 | 450 | 0 | 0 | 50 | 175 | 47.0 | SP-P | 0.23 |

1), 2), 3), 4), 5), 6), 7): The same as defined in Table 1.

8) SP-N: Commercially available high range AE water reducing agent of naphthalene sulfonate formaldehyde condensate type ("RHEOBUILD SP-9N", a product of NMB Co., Ltd.)

9) SP-P: Commercially available high range AE water reducing agent of polycarboxylic acid type ("RHEOBUILD SP-8N", a product of NMB Co., Ltd.)

Table 3

| Copolymer | Alkenyl Ethers of Formulae (I) (II) & (III) | Number Average Molecular Weight |
|---|---|---|
| Formula (I) | | |
| (a) | $CH_2=CHCH_2O(C_2H_4O)_{66}CH_3$ | 30,000 |
| (b) | $CH_2=CHCH_2O(C_2H_4O)_{91}CH_3$ | 40,000 |
| Formula (II) | | |
| (c) | $CH_2=CHCH_2O(C_2H_4O)_{11}CH_3$ | 20,000 |
| (d) | $CH_2=CHCH_2O(C_2H_4O)_{33}CH_3$ | 20,000 |
| (e) | $CH_2=CHCH_2O(C_3H_6O)_{15}(C_2H_4O)_{15}C_4H_9$ *1) | 35,000 |
| (f) | $CH_2=CHCH_2O(C_3H_6O)_{6}(C_2H_4O)_{12}CH_3$ *2) | 30,000 |
| Formula (III) | | |
| (g) | $CH_2=CHCH_2O(C_2H_4O)_{115}CH_3$ | 45,000 |

*1) : $(C_3H_6O)(C_2H_4O)$ : 15:15 random adduct

*2) : $(C_3H_6O)(C_2H_4O)$ : 6:12 block adduct

Table 4

| Example No. | Immediately After Mixing: Slump (cm) | Flow (cm) | Air Content (volume %) | Flow Rate[1)] (cm/sec) | After 60 Minutes: Slump (cm) | Flow (cm) | Air Content (volume %) | Flow Rate[1)] (cm/sec) | Setting Time (hour:minute) Initial Setting / Final Setting | Resistance To Segregation |
|---|---|---|---|---|---|---|---|---|---|---|
| 1 | 21.8 | 47.7 | 1.2 | 0.92 | 22.3 | 48.0 | 0.9 | 0.95 | 6:45 / 8:35 | A |
| 2 | 23.5 | 52.5 | 1.0 | 0.88 | 24.0 | 55.5 | 1.1 | 0.80 | 6:20 / 8:30 | A |
| 3 | 22.3 | 55.5 | 1.3 | 0.78 | 23.2 | 57.5 | 1.1 | 0.83 | 6:15 / 8:15 | A |
| 4 | 23.0 | 56.5 | 1.1 | 0.75 | 23.0 | 52.5 | 0.8 | 0.78 | 6:35 / 8:20 | A |
| 5 | 22.5 | 57.0 | 1.0 | 0.82 | 23.8 | 59.2 | 1.1 | 0.78 | 6:45 / 8:55 | A |
| 6 | 22.8 | 59.0 | 1.1 | 0.75 | 24.0 | 61.0 | 0.7 | 0.72 | 6:20 / 8:15 | A |
| 7 | 23.0 | 56.5 | 1.0 | 0.72 | 24.3 | 58.5 | 0.9 | 0.69 | 6:55 / 8:40 | A |
| 8 | 22.8 | 58.8 | 1.2 | 0.78 | 23.5 | 60.7 | 0.7 | 0.75 | 6:55 / 8:50 | A |
| 9 | 24.0 | 58.0 | 0.9 | 0.65 | 24.5 | 61.5 | 0.5 | 0.68 | 6:40 / 8:50 | A |
| 10 | 22.0 | 57.5 | 1.2 | 0.63 | 23.0 | 61.0 | 1.1 | 0.66 | 6:55 / 8:55 | A |
| 11 | 23.6 | 59.0 | 1.3 | 0.60 | 24.5 | 62.5 | 1.1 | 0.64 | 7:05 / 9:20 | A |
| 12 | 21.5 | 49.5 | 1.2 | 1.10 | 20.5 | 44.5 | 1.2 | 0.95 | 6:45 / 8:45 | B |
| 13 | 22.5 | 52.5 | 1.0 | 0.80 | 21.5 | 51.0 | 1.1 | 0.85 | 6:40 / 8:45 | A |
| 14 | 23.0 | 53.5 | 1.2 | 0.78 | 23.5 | 54.0 | 0.9 | 0.83 | 6:20 / 8:10 | A |

Table 4 (-continued)

| Example No. | Immediately After Mixing Slump (cm) | Immediately After Mixing Flow (cm) | Immediately After Mixing Air Content (volume %) | Immediately After Mixing Flow Rate[1)] (cm/sec) | After 60 Minutes Slump (cm) | After 60 Minutes Flow (cm) | After 60 Minutes Air Content (volume %) | After 60 Minutes Flow Rate[1)] (cm/sec) | Setting Time (hour:minute) Initial Setting / Final Setting | Resistance To Segregation |
|---|---|---|---|---|---|---|---|---|---|---|
| 15 | 22.5 | 46.6 | 1.8 | 0.86 | 23.5 | 48.5 | 1.9 | 0.86 | 6:35 / 8:10 | A |
| 16 | 23.5 | 50.5 | 1.2 | 0.65 | 22.5 | 52.2 | 1.1 | 0.68 | 6:40 / 8:30 | A |
| 17 | 22.5 | 58.5 | 1.6 | 0.62 | 23.2 | 60.5 | 1.6 | 0.61 | 7:15 / 9:15 | A |
| 18 | 23.0 | 59.5 | 1.2 | 0.65 | 24.0 | 61.2 | 1.3 | 0.61 | 6:50 / 8:45 | A |
| 19 | 21.5 | 57.5 | 1.3 | 0.59 | 20.8 | 57.2 | 1.6 | 0.57 | 7:05 / 8:55 | A |
| 20 | 22.5 | 59.5 | 1.7 | 0.63 | 23.8 | 61.5 | 1.5 | 0.61 | 6:50 / 8:50 | A |
| 21 | 24.0 | 63.5 | 1.2 | 0.53 | 24.5 | 61.2 | 1.3 | 0.49 | 8:20 /10:25 | A |
| 22 | 21.9 | 59.5 | 1.4 | 0.53 | 22.7 | 61.2 | 1.3 | 0.51 | 6:45 / 8:55 | A |
| 23 | 23.6 | 57.3 | 1.6 | 0.55 | 24.0 | 58.7 | 1.8 | 0.53 | 7:10 / 9:50 | A |
| 24 | 23.0 | 62.6 | 0.9 | 0.51 | 24.5 | 61.8 | 0.7 | 0.53 | 7:25 / 9:35 | A |
| 25 | 22.6 | 59.8 | 1.2 | 0.64 | 23.1 | 61.9 | 1.3 | 0.66 | 6:45 / 8:40 | A |
| 26 | 21.4 | 57.5 | 1.0 | 0.65 | 22.8 | 60.3 | 1.3 | 0.61 | 7:00 / 9:05 | A |
| 27 | 23.2 | 55.5 | 1.7 | 0.65 | 24.6 | 61.2 | 1.5 | 0.70 | 7:45 / 9:55 | A |
| 28 | 21.0 | 39.5 | 1.9 | 0.80 | 21.5 | 42.5 | 1.7 | 0.85 | 6:50 / 8:45 | B |
| 29 | 22.2 | 44.0 | 1.5 | 0.77 | 24.5 | 48.5 | 1.3 | 0.80 | 7:05 / 9:00 | A |
| 30 | 21.4 | 42.5 | 1.2 | 0.78 | 22.8 | 45.5 | 1.1 | 0.78 | 7:10 / 9:20 | A |

1) Flow rate (cm/sec): $\frac{\text{(Slump flow - 20) x 1/2}}{\text{Time required for slump flow}}$

Table 5

| Comparative Example No. | Immediately After Mixing Slump (cm) | Flow (cm) | Air Content (volume %) | Flow Rate[1)] (cm/sec) | After 60 Minutes Slump (cm) | Flow (cm) | Air Content (volume %) | Flow Rate[1] (cm/sec) | Setting Time (hour:minute) Initial Setting / Final Setting | Resistance To Segregation |
|---|---|---|---|---|---|---|---|---|---|---|
| 1 | 23.5 | 55.0 | 0.9 | 1.25 | 20.5 | 48.5 | 1.0 | 1.05 | 9:35 /11:15 | C |
| 2 | 23.0 | 53.5 | 1.0 | 1.00 | 21.5 | 49.5 | 1.0 | 0.88 | 7:05 / 9:00 | C |
| 3 | 23.4 | 54.3 | 1.1 | 0.88 | 22.0 | 50.5 | 0.8 | 0.70 | 7:10 / 9:00 | C |
| 4 | 23.0 | 53.8 | 1.2 | 1.10 | 22.0 | 51.5 | 1.1 | 0.95 | 7:05 / 8:55 | C |
| 5 | 22.0 | 56.0 | 0.9 | 0.75 | >25 | >65 | 0.9 | - | 6:10 / 8:05 | C |
| 6 | 23.0 | 52.6 | 0.8 | 0.38 | 19.5 | 36.5 | 1.0 | 0.41 | 7:55 / 9:50 | D |
| 7 | 23.3 | 53.1 | 1.8 | 0.56 | 20.2 | 48.8 | 1.9 | 0.49 | 7:10 / 9:20 | C |
| 8 | 21.4 | 53.3 | 1.2 | 0.27 | 20.0 | 47.2 | 1.1 | 0.30 | 8:10 /10:15 | D |
| 9 | 23.0 | 56.8 | 1.5 | 0.46 | 21.9 | 50.5 | 1.9 | 0.39 | 7:40 / 9:45 | C |
| 10 | 23.8 | 58.5 | 1.2 | 0.52 | 21.4 | 53.8 | 1.3 | 0.45 | 8:15 /10:30 | D |
| 11 | 24.1 | 57.2 | 1.5 | 0.65 | 21.1 | 53.9 | 1.6 | 0.61 | 7:55 /10:00 | C |

1) Flow rate: The same as defined in Table 4.

## Claims

1. A concrete composition having high flowability comprising:
(a) 350 to 700 kg of a hydraulic cement material per $m^3$ of concrete composition;
(b) up to 185 kg of water per $m^3$ of concrete composition;
(c) fine aggregate;
(d) coarse aggregate;
(e) 0.05 to 3 parts by weight, based on 100 parts by weight of the hydraulic cement material, of at least one Copolymer A of an alkenyl ether of the formula

$$R^1O(AO)_nR^2 \qquad (I)$$

wherein
$R^1$ represents a $C_{2-5}$ alkenyl group;
$R^2$ represents a $C_{1-4}$ alkyl group;
AO represents a $C_{2-18}$ oxyalkylene group in which O represents an oxygen atom and A represents an alkylene group; and
n represents an average adduct mole number of the oxyalkylene group of from 60 to 95,
and maleic anhydride at a mole ratio of the alkenyl ether (I) to the maleic anhydride of 30:70 to 70:30, its hydrolyzed product or a salt of the hydrolyzed product.

2. A concrete composition according to claim 1 further comprising 5 to 30 parts by weight, based on 100 parts by weight of Copolymer A, its hydrolyzed product or a salt of the hydrolyzed product, of a Copolymer B of an alkenyl ether of the formula:

$$R^1O(AO)_mR^2 \qquad (II)$$

wherein
$R^1$ represents a $C_{2-5}$ alkenyl group;
$R^2$ represents a $C_{1-4}$ alkyl group;
AO represents a $C_{2-18}$ oxyalkylene group in which O represents an oxygen atom and A represents an alkylene group; and
m represents an average adduct mole number of the oxyalkylene group of from 1 to 40
and maleic anhydride at a mole ratio of the alkenyl ether (II) to the maleic anhydride of 30:70 to 70:30, its hydrolyzed product or a salt of the hydrolyzed product or a Copolymer C of an alkenyl ether of the formula:

$$R^1O\ (AO)_pR^2 \qquad (III)$$

wherein
$R^1$ represents a $C_{2-5}$ alkenyl group;
$R^2$ represents a $C_{1-4}$ alkyl group;
AO represents a $C_{2-18}$ oxyalkylene group in which O represents an oxygen atom and A represents an alkylene group; and
p represents an average adduct mole number of the oxyalkylene group of from 100 to 150,
and maleic anhydride at a mole ratio of the alkenyl ether (III) to the maleic anhydride of 30:70 to 70:30, its hydrolyzed product or a salt of the hydrolyzed product.

3. A concrete composition having high flowability comprising:
(a) 350 to 700 kg of a hydraulic cement material per $m^3$ of concrete composition;
(b) at most 185 kg of water per $m^3$ of concrete composition;
(c) fine aggregate;
(d) coarse aggregate;
(e) 0.05 to 3 parts by weight, based on 100 parts by weight of the hydraulic cement material, of a mixture comprising:
(1) at least one Copolymer B of an alkenyl ether of the formula

$$R^1O(AO)_mR^2 \qquad (II)$$

wherein
$R^1$ represents a $C_{2-5}$ alkenyl group;
$R^2$ represents a $C_{1-4}$ alkyl group;
AO represents a $C_{2-18}$ oxyalkylene group in which O represents an oxygen atom and A

represents an alkylene group; and
m represents an average adduct mole number of the oxyalkylene group of from 1 to 40,
and maleic anhydride at a mole ratio of the alkenyl ether (II) to the maleic anhydride of 30:70 to 70:30, its hydrolyzed product or a salt of the hydrolyzed product; and
(2) at least one Copolymer C of an alkenyl ether represented by the formula

$$R^1O\,(AO)_pR^2 \qquad (III)$$

wherein
$R^1$ represents a $C_{2-5}$ alkenyl group;
$R^2$ represents a $C_{1-4}$ alkyl group;
AO represents a $C_{2-18}$ oxyalkylene group in which O represents an oxygen atom and A represents an alkylene group; and
p represents an average adduct mole number of the oxyalkylene group of from 100 to 150,
and maleic anhydride at a mole ratio of the alkenyl ether (III) to the maleic anhydride of 30:70 to 70:30, its hydrolyzed product or a salt of the hydrolyzed product at a weight ratio of said Copolymer B to said Copolymer C of 95-50:5-50.

**4.** A concrete composition according to any one of claims 1, 2 or 3, wherein the hydraulic cement material (a) is portland cement.

**5.** A concrete composition according to any one of claims 1, 2 or 3, wherein the hydraulic cement material (a) is a mixture of portland cement and at least one fine powder selected from blast-furnace slag, fly ash, silica stone powder, natural mineral powder and superfine siliceous powder.

**6.** A concrete composition according to claim 5, wherein the fine powder is employed in an amount of up to 50% by weight of the portland cement.

**7.** A concrete composition according to any one of the preceding claims, wherein the hydraulic cement material (a) has a specific surface area by Blaine of 2,500 to 200,000 $cm^2/g$.

**8.** A concrete composition according to any one of the preceding claims, wherein the mole ratio of the alkenyl ether (I), (II) or (III) to the maleic anhydride is about 1:1.

**9.** A concrete composition according to any one of the preceding claims, wherein $R^1$ in the alkenyl ether (I), (II) or (III) is an allyl group.

**10.** A concrete composition according to any one of the preceding claims, wherein $R^2$ in the alkenyl ether (I), (II) or (III) is a methyl or butyl group.

**11.** A concrete composition according to any one of the preceding claims, wherein AO in the alkenyl ether (I), (II) or (III) is a $C_{2-4}$ oxyalkylene group.

**12.** A concrete composition according to claim 11, wherein the $C_{2-4}$ oxyalkylene group is an oxyethylene group, an oxypropylene group or a mixture thereof.

European Patent Office

# EUROPEAN SEARCH REPORT

Application Number
EP 93 30 1841

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | EP-A-0 490 681 (W.R. GRACE & CO)<br>* claims; table 1 * | 1-12 | C04B24/26<br>C04B28/02 |
| A | EP-A-0 373 621 (NIPPON OIL AND FATS CO)<br>* claims; example 17; tables 1-2,5 * | 1-12 | |
| P,A | FR-A-2 668 773 (SANDOZ)<br>* claims * | 1-12 | |
| A | EP-A-0 056 627 (NIPPON SHOKUBAI K.K.)<br>* claims * | 1-12 | |

TECHNICAL FIELDS SEARCHED (Int. Cl.5)
C04B

The present search report has been drawn up for all claims

| Place of search | Date of completion of the search | Examiner |
|---|---|---|
| BERLIN | 23 JUNE 1993 | KUEHNE H.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)